# EUROPÄISCHE PATENTSCHRIFT

(11) **EP 3 816 335 B1**
(45) Veröffentlichungstag und Bekanntmachung des Hinweises auf die Patenterteilung: **26.07.2023**
(21) Anmeldenummer: 20199871.3
(22) Anmeldetag: 02.10.2020
(51) Int. Cl.: D06F 34/22, D06F 35/00, G01N 21/15, G01N 21/85, A47L 15/42

(54) **SENSORVORRICHTUNG, VERFAHREN ZUM BETRIEB EINER SOLCHEN SENSORVORRICHTUNG UND WASSERFÜHRENDES HAUSHALTSGERÄT**
SENSOR DEVICE, METHOD FOR OPERATING SUCH A SENSOR DEVICE AND WATER-CONDUCTING DOMESTIC APPLIANCE
DISPOSITIF CAPTEUR, PROCÉDÉ DE FONCTIONNEMENT D'UN TEL DISPOSITIF CAPTEUR ET APPAREIL ÉLECTROMÉNAGER À CIRCULATION D'EAU

(30) Priorität: 29.10.2019 DE 102019216599
(43) Veröffentlichungstag der Anmeldung: 05.05.2021
(73) Patentinhaber: E.G.O. Elektro-Gerätebau GmbH, 75038 Oberderdingen (DE)
(72) Erfinder: Grill, Rebecca, 75038 Oberderdingen (DE); Schaumann, Uwe, 75038 Oberderdingen (DE); Schmidt, Kay, 75038 Oberderdingen (DE)
(74) Vertreter: Patentanwälte Ruff, Wilhelm, Beier, Dauster & Partner mbB

(56) Entgegenhaltungen:
- EP-A1- 2 422 678
- EP-A1- 2 746 751
- WO-A1-2009/150663
- WO-A1-2015/010143
- DE-A1-102016 014 633

## Beschreibung

### ANWENDUNGSGEBIET UND STAND DER TECHNIK

Die Erfindung betrifft eine Sensorvorrichtung für ein wasserführendes Haushaltsgerät, ein solches wasserführendes Haushaltsgerät sowie ein Verfahren zum Betrieb einer solchen Sensorvorrichtung.

Aus der EP 3553220 A1 ist eine Sensorvorrichtung bekannt, die ein Sensorkammergehäuse mit Sensorkammer und Sensor darin beschreibt. Durch spezielle Ausgestaltung der Sensorkammer kann in der Sensorkammer unter Umständen selbst bei Fluiddurchfluss ein beruhigter Bereich geschaffen werden, in dem mittels eines Sensors ein darin befindliches Fluid untersucht werden kann. So können beispielsweise Mikrofasern oder Verunreinigungen in dem Fluid erkannt werden.

Aus der DE 102016014633 A1 geht eine Sensorvorrichtung hervor, wie sie beispielsweise in einem Bioreaktor eingesetzt werden kann. Dabei soll eine Partikelkonzentration in einer Flüssigkeit bestimmt werden. Hierzu ist eine optische Messvorrichtung vorgesehen, die in die Flüssigkeit im Reaktor einfach eingetaucht ist. Mittels einer Düse kann ein Fluid in die Messvorrichtung bzw. an einen Sensor geleitet werden zur Reinigung von Messvorrichtung bzw. Sensor.

Aus der WO 2015/010143 A1 ist eine weitere Sensorvorrichtung bekannt, um einen Parameter einer Flüssigkeit zu erfassen, wobei eine entsprechende Messvorrichtung beispielsweise in einem Tank für Flüssigkeit angeordnet sein kann. Mittels einer Düsenvorrichtung kann ein Reinigungsmittel verteilt werden, das von einem blockförmigen Vorrat abgetragen wird. Dieses Reinigungsmittel wird dann in die darunter angeordnete Sensorvorrichtung geleitet zu deren Reinigung, nach der Reinigung wird es abgeleitet.

Aus der EP 2422678 A1 ist eine Messvorrichtung für ein wasserführendes Haushaltsgerät bekannt, beispielsweise ein Geschirrspüler oder eine Waschmaschine. Eine Düse ist vorgesehen, um eine Oberflächenspannung einer Prozessflüssigkeit zu ermitteln. Somit ist die Düse selbst Teil der Messvorrichtung, eine Sensorkammer odgl. ist darin überhaupt nicht vorhanden.

Aus der WO 2009/150663 A1 ist ein Durchfluss-Messgerät bekannt. Aufgrund des Durchflussverhaltens können Rückschlüsse auf ein hindurchfließendes Fluid gezogen werden.

Aus der EP 2746751 A1 ist eine weitere Messvorrichtung zur optischen Überwachung eines Parameters einer Flüssigkeit bekannt, insbesondere von Abwasser. Hierfür werden optische Sensoren verwendet.

### AUFGABE UND LÖSUNG

Der Erfindung liegt die Aufgabe zugrunde, eine Sensorvorrichtung zum Einsatz in einem wasserführenden Haushaltsgerät zu schaffen sowie ein Verfahren, mit denen Probleme des Standes der Technik gelöst werden können und es insbesondere möglich ist, die Sensorvorrichtung sinnvoll und vorteilhaft betreiben zu können. Des Weiteren soll auch ein wasserführendes Haushaltsgerät mit einer solchen Sensorvorrichtung geschaffen werden, mit dem Probleme des Standes der Technik gelöst werden können und es insbesondere möglich ist, eine Sensorvorrichtung vorteilhaft betreiben zu können und insbesondere eine vorteilhafte Messung mit dem Sensor zu erreichen, die praxistauglich und möglichst genau ist.

Gelöst wird diese Aufgabe durch eine Sensorvorrichtung mit den Merkmalen des Anspruchs 1, durch ein wasserführendes Haushaltsgerät mit den Merkmalen des Anspruchs 12 sowie durch ein Verfahren zum Betrieb einer solchen Sensorvorrichtung mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für die Sensorvorrichtung, nur für das Verfahren oder nur für das Haushaltsgerät beschrieben. Sie sollen jedoch unabhängig davon sowohl für die Sensorvorrichtung als auch für das Haushaltsgerät sowie für das Verfahren selbständig und unabhängig voneinander gelten können. Der Wortlaut der Ansprüche wird durch ausdrückliche Bezugnahme zum Inhalt der Beschreibung gemacht.

Es ist vorgesehen, dass die Sensorvorrichtung in dem Haushaltsgerät dazu dient, ein Fluid zu untersuchen, insbesondere ein Fluid, das in dem Haushaltsgerät bei einem Reinigungsvorgang oder Waschvorgang benutzt wird und vorteilhaft zirkuliert. Aus diesem Fluid sollen möglichst Rückschlüsse auf einen Zustand in dem Haushaltsgerät bzw. des Reinigungsverfahrens gezogen werden können, insbesondere sollen Verunreinigungen oder Anteile von Fasern odgl. erkannt werden können.

Die Sensorvorrichtung weist ein Sensorkammergehäuse auf, das wiederum eine Sensorkammer und eine Fluidführung aufweist. Die Fluidführung führt bzw. leitet das zu untersuchende Fluid innerhalb des Sensorkammergehäuses bzw. zur Sensorkammer hin und von der Sensorkammer auch wieder weg. Die Sensorkammer ist vorteilhaft für einen Durchfluss des Fluids ausgebildet, besonders vorteilhaft mit einem Sensorkammer-Einlass und einem Sensorkammer-Auslass. So kann Fluid sowohl leicht zugeführt werden als auch leicht abgeführt werden, insbesondere kann jeweils auch tatsächlich frisches Fluid für eine exakte und genaue Messung herangeführt werden.

In oder an der Sensorkammer ist mindestens ein Sensor vorgesehen, der dazu ausgebildet und entsprechend angeordnet ist, das in der Sensorkammer befindliche Fluid oder in diesem Fluid befindliche Stoffe oder Verunreinigungen erkennen zu können. Eine Erkennung erfolgt auf alle Fälle qualitativ, vorteilhaft auch quantitativ. Hierfür wird auf den vorgenannten Stand der Technik verwiesen.

Die Sensorvorrichtung weist erfindungsgemäß eine Düsenvorrichtung auf, die in die Sensorkammer und/oder in die Fluidführung reicht oder gerichtet ist, um damit ein Fluid einzustrahlen. Dies soll zur Reinigung der Sensorkammer dienen. Es ist eine Fluidversorgung für die Düse vorgesehen, vorteilhaft in Form einer Düsenzuleitung. In dieser Fluidversorgung können ein Ventil und/oder eine Pumpe vorgesehen sein, um einen entsprechenden Fluiddruck aufzubauen. Schließlich weist die erfindungsgemäße Sensorvorrichtung eine Steuerung auf, die mit der Fluidversorgung für die Düsenvorrichtung verbunden ist, insbesondere mit einem zuvor genannten darin enthaltenen Ventil und/oder einer Pumpe. So kann die Steuerung sozusagen die Düse aktivieren und deaktivieren, also einen Reinigungsvorgang in der Sensorkammer gezielt veranlassen. Die Steuerung kann gegebenenfalls auch mit dem Sensor verbunden sein, um dessen Auswertung vorzunehmen oder um zumindest zu erkennen, wann der Sensor arbeitet, damit dann die Düse nicht aktiviert wird. Sobald der Sensor mit einer Messung fertig ist, kann die Düse entsprechend aktiviert werden von der Steuerung zur Reinigung der Sensorkammer und gegebenenfalls auch des Sensors. Diese Steuerung kann vorteilhaft auch zur Ansteuerung und Auswertung des Sensors selbst vorgesehen sein. Unter Umständen kann sie eine einzige gesamte Steuerung für das gesamte Haushaltsgerät sein.

Somit ist es mit der Erfindung möglich, dass nicht nur hindurchströmendes Fluid aus dem normalen Reinigungsvorgang des Haushaltsgeräts dazu verwendet werden kann, die Sensorkammer und gegebenenfalls auch den Sensor zu reinigen. Durch die zusätzliche Reinigung mittels der Düse kann dies erheblich gründlicher erfolgen und vor allem auch schneller. So kann gezielter und häufiger nach Wunsch mit dem Sensor gemessen werden.

In weiterer Ausgestaltung der Erfindung kann vorgesehen sein, dass die Düsenvorrichtung in der Sensorkammer auf eine bestimmte Stelle gerichtet ist, die bei durchströmendem Fluid, insbesondere entlang der Durchströmungsrichtung des Fluids aus der Düse, vor derjenigen Stelle liegt, an der der Sensor misst. So wird also nicht nur direkt die Messstelle gereinigt, sondern etwas umfangreicher und damit auch gründlicher deren Umgebung, insbesondere die vorgelagerte Umgebung. Alternativ könnte der Fluidstrahl der Düse natürlich auch auf genau diejenige Stelle gerichtet werden, an der der Sensor misst. Dann kann an dieser Stelle gezielt und genau gereinigt werden.

Bei der Erfindung ist die Düse am Eintritt eines Teils oder Bereichs der Fluidführung zu der Sensorkammer in diese hinein angeordnet, also im Sensorkammergehäuse, aber in etwa dort, wo eben Fluid in die Sensorkammer selbst eintreten soll. Dies bedeutet vorteilhaft, dass die Düse sozusagen kurz vor derjenigen Stelle angeordnet ist, an der der Sensor misst. Damit sind dann an sich beide vorgenannten Möglichkeiten offen, wohin die Düse gerichtet ist. Besonders vorteilhaft ist eine Düse in einem Bereich angeordnet, in dem sich die Fluidführung zu der Sensorkammer im Durchflussquerschnitt deutlich vergrößert, besonders vorteilhaft um mehr als 50% oder sogar um mehr als 100% vergrößert. Dann kann die Düse unter Umständen bereits dort angeordnet sein, wo der Durchflussquerschnitt vergrößert ist. Somit ist auf alle Fälle auch genügend Platz für die Anordnung der Düse gegeben. Schließlich können deren Abmessungen zwar gering ausgebildet sein, ein gewisser Platzbedarf ist aber auf alle Fälle notwendig.

Bei der Erfindung ist die Düsenvorrichtung derart ausgerichtet, dass ihre Strahlrichtung zumindest teilweise eine Richtungskomponente entlang der Fluidströmung durch die Sensorkammer aufweist. Somit kann die Düse in etwa oder zumindest teilweise eine Fluidströmung entsprechend der normalen Fluidströmung durch das Sensorkammergehäuse bewirken. Dann sind mögliche negative Auswirkungen auf die Fluidführung geringer. Ein Winkel der Strahlrichtung kann maximal 45° betragen zu der Richtung der Fluidströmung an derjenigen Stelle, an der der Sensor misst. Der Winkel kann unter Umständen auch etwas geringer sein, beispielsweise maximal 30° zu der Richtung der Fluidströmung an der Stelle betragen, an der der Sensor misst.

In einer einfachen Ausgestaltung der Erfindung kann vorgesehen sein, dass die Düsenvorrichtung fest an der Sensorvorrichtung befestigt ist. Sie kann beispielsweise eingeschraubt oder fest eingesteckt sein. So kann eine Dichtheit des Sensorkammergehäuses sichergestellt werden, was von Bedeutung ist. Des Weiteren kann so die Ausrichtung der Düsenvorrichtung bzw. einer Düse oder eines Düsenstrahls der Düsenvorrichtung dauerhaft sichergestellt sein. Dadurch ist eine optimale und dauerhaft gute Funktion zur Reinigung der Sensorkammer sichergestellt. Die Düsenvorrichtung kann beispielsweise entnehmbar sein für Reparaturzwecke oder auch, um die Sensorkammer durch die dadurch entstehende Öffnung von größeren Verunreinigungen zu befreien. Möglicherweise kann auch ein Sensor gereinigt oder ersetzt werden durch die dadurch entstehende Öffnung hindurch, kann also auch entnehmbar sein. Auch die gesamte Sensorvorrichtung kann beispielsweise entnehmbar sein für Reparaturzwecke oder zum Reinigen.

In alternativer Ausgestaltung der Erfindung kann die Düse der Düsenvorrichtung, unabhängig von der Art ihrer Befestigung, derart ausgebildet sein, dass sie einen oszillierenden Düsenstrahl erzeugt. Dieser weist also keine feststehende einzige Richtung oder Ausbildung auf, beispielsweise als Kegelstrahl, sondern kann sich regelmäßig oder auch unregelmäßig bewegen bzw. oszillieren. Ein solches Bewegen oder Oszillieren erfolgt vorteilhaft in einer Ebene, also sozusagen hin- und herschwenkend, um insgesamt eine Art Fächer zu bilden, der sozusagen durch den oszillierenden Düsenstrahl erzeugt wird. Alternativ kann ein solcher Düsenstrahl innerhalb oder entlang eines Kegels oszillieren bzw. variieren und so einen größeren räumlichen Bereich treffen und reinigen.

Eine vorstehend beschriebene oszillierend oder bewegbar ausgebildete Düse kann einen Düsenkammerraum aufweisen, in dem bewegbare Teile angeordnet sind. Diese erzeugen dann den oszillierenden Düsenstrahl. Hierfür kann beispielsweise ein beweglicher Schlegel, eine frei bewegbare Kugel odgl. verwendet werden. Alternativ kann eine oszillierend ausgebildete Düse ohne bewegbare Teile in ihrem Inneren bzw. in einem vorgenannten Düsenkammerraum ausgebildet sein. Eine solche Düse kann beispielsweise ausgebildet sein entsprechend der EP 3302812 A1. Hier können durch eine entsprechende Ausgestaltung des Inneren bzw. eines Düsenkammerraums in der Düse veränderliche Strömungen entstehen, die den Düsenstrahl dann eben unterschiedlich ablenken bzw. oszillieren lassen, möglicherweise zusätzlich zu verschiedenen gewählten Drücken des Fluids. Eine solche oszillierend ausgebildete Düse ohne bewegbare Teile ist erkennbar sehr verschleißarm und somit sehr vorteilhaft.

In weiterer Ausgestaltung der Erfindung kann vorgesehen sein, dass eine Düsenzuleitung, mit der die Düse mit Fluid versorgt wird, als Schlauchleitung flexibel bzw. bewegbar ausgebildet ist. So kann zum einen die Düsenvorrichtung wie vorbeschrieben von der Sensorvorrichtung bzw. dem Sensorkammergehäuse entfernt werden. Zum anderen können, wie nachfolgend noch erläutert wird, die Sensorvorrichtung und somit auch das Sensorkammergehäuse samt daran befestigter Düsenvorrichtung bewegt werden.

Bei einer Düsenvorrichtung, die einen oszillierenden Düsenstrahl aufweist, wird die vorgenannte Düsenrichtung vorteilhaft durch eine Mittelrichtung oder durch eine Symmetrieachse desjenigen Bereichs definiert, innerhalb dessen der Düsenstrahl oszilliert. Bei den vorgenannten Ausbildungen eines oszillierenden Düsenstrahls als Fächer oder als Kegel ist dies dann jeweils eine Mittelrichtung, welche gleichzeitig die Symmetrieachse ist.

In weiterer vorteilhafter Ausgestaltung der Erfindung ist es möglich, dass der Sensor nicht fest und nicht an einer einzigen Stelle am oder im Sensorkammergehäuse befestigt ist, also nicht mit fester Zuordnung, sondern relativ dazu beweglich ist. Dann kann die Sensorkammer mindestens zwei Messstellen für den Sensor aufweisen, wobei die Sensorkammer relativ zu dem Sensor bewegbar ist zwischen diesen mindestens zwei Relativ-Messpositionen. In jeder dieser Relativ-Messpositionen ist der Sensor auf eine der Messstellen gerichtet. Dadurch kann es ermöglicht werden, dass mit zeitlichem Abstand abwechselnd an jeder der Relativ-Messpositionen und entsprechenden Messstellen gemessen wird. So kann beispielsweise erreicht werden, dass nach Einbringen von frischem Fluid aus einem Reinigungsverfahren odgl. in dem Haushaltsgerät, welches beide Messstellen einigermaßen gleichzeitig erreicht, eine unterschiedliche Verweildauer vorgesehen ist. So kann das eingebrachte Fluid an einer Messstelle wenige Sekunden nach dem Einbringen gemessen werden, wenn sich beispielsweise Verunreinigungen, Fasern odgl. in dem Fluid nur geringfügig abgesetzt haben oder eine Wegtrocknung des Fluids nur geringfügig erfolgt ist. Dann kann für eine an sich übliche Dauer von wenigen Sekunden, wie sie in der vorgenannten EP 3553220 A1 beschrieben ist, an dieser ersten Messstelle gemessen werden. An der zweiten Messstelle kann dann einige Sekunden später gemessen werden, wobei hier die Fasern oder Verunreinigungen etwas länger und somit stärker aus dem Fluid herausgefällt oder sich abgesetzt haben können. In alternativer Ausgestaltung der Erfindung kann vorgesehen sein, dass nach dem Einbringen von frischem Fluid, das mittels des Sensors zu überwachen ist, eine Trocknung in der Sensorkammer bzw. an den Messstellen erfolgen sollte. So kann beispielsweise besser mit einem Spektrometer bzw. mit optischen Sensoren gemessen werden. An der zweiten Messstelle ist dann etwas mehr Zeit vergangen, so dass hier auch etwas anderes erfasst werden kann. Daraus können insgesamt bessere Aussagen über die Art von Fasern oder Verunreinigungen in dem Fluid getroffen werden.

In Bezug auf das zuvor Gesagte mit den zwei unterschiedlichen Messstellen kann auch vorgesehen sein, dass durch lokale Erwärmung an einer der Messstellen eine stärkere Trocknung des Fluids vorgenommen wird, wofür neben einer erhöhten Temperatur auch mehr Zeit benötigt wird. Somit kann an dieser Messstelle die zweite Messung durchgeführt werden, nachdem an der ersten Messstelle die erste Messung durchgeführt worden ist. Auch dadurch kann die Zeit besser genutzt werden.

In nochmals weiterer Ausgestaltung der Erfindung kann zur Durchführung der vorgenannten Relativbewegung zwischen Sensor und Sensorkammergehäuse eine Aktorvorrichtung vorgesehen sein. Eine solche Aktorvorrichtung kann grundsätzlich beliebig ausgebildet sein, beispielsweise einen Motor oder einen Elektromagnet aufweisen. In einer vorteilhaften Ausgestaltung der Erfindung kann sie thermisch beeinflussbar sein durch einen thermischen Aktor, wobei für die thermische Beeinflussung ein erwärmtes Fluid bzw. warmes Wasser genutzt werden kann, wie es ohnehin für einen ablaufenden Reinigungsvorgang in dem Haushaltsgerät verwendet wird. Eine Zuleitung zu der Aktorvorrichtung kann dann beispielsweise durch ein Ventil veranlasst werden. Hierfür kann die vorgenannte Steuerung zuständig sein, wenn eben ein Wechsel der Messstellen veranlasst werden soll.

Ein Reinigen der Sensorkammer bzw. einer der Messstellen mittels der Düsenvorrichtung, indem ein Düsenstrahl bestehend aus Fluid wie Wasser oder Luft in die Sensorkammer eingebracht wird, kann nach Durchführen einer Messung mit dem Sensor an der entsprechenden Messstelle und/oder davor erfolgen. Vorteilhaft kann eine Reinigung direkt nach Durchführen einer Messung bzw. direkt davor erfolgen, so dass nicht allzu viel Zeit vergeht. Dies kann eine Dauer von maximal 5 Sekunden bedeuten, unter Umständen auch nur maximal 2 Sekunden oder maximal eine einzige Sekunden. So ist unter Umständen ein relativ schneller Wechsel von Messungen möglich mit einer hohen erreichbaren Informationsdichte bezüglich des Fluids samt Fasern oder Verunreinigungen darin, insbesondere während eines Reinigungsverfahrens an dem Haushaltsgerät. Dies kann vorteilhaft in bestimmten Phasen des Reinigungsverfahrens durchgeführt werden, wenn mit besonders vielen oder besonders deutlichen Verunreinigungen oder Faseranteilen in dem Fluid, vorteilhaft einer Flüssigkeit, gerechnet werden muss.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine schematische Darstellung einer Waschmaschine mit einer erfindungsgemäßen Sensorvorrichtung in schematischer Darstellung,
- Fig. 2: eine Draufsicht auf eine erfindungsgemäße Sensorvorrichtung in einer ersten Ausgestaltung mit Fluidführung und Sensorkammer sowie einer Düse in die Sensorkammer hinein,
- Fig. 3: eine andere Schnittdarstellung durch die Sensorvorrichtung aus Fig. 2,
- Fig. 4: eine erfindungsgemäße Sensorvorrichtung in einer zweiten Ausgestaltung mit einer Sensorkammer, in die eine Düse hineinragt, die auf eine Messstelle gerichtet ist,
- Fig. 5: eine andere Schnittdarstellung durch die Sensorvorrichtung aus Fig. 4,
- Fig. 6: eine Schnittdarstellung durch eine spezielle Düse, die ohne bewegbare Teile im Inneren einen oszillierenden Düsenstrahl erzeugt, und
- Fig. 7: eine vereinfachte Darstellung einer Sensorvorrichtung in einer dritten Ausgestaltung, die bewegbar ist.

### DETAILLIERTE BESCHREIBUNG DER AUSFÜHRUNGSBEISPIELE

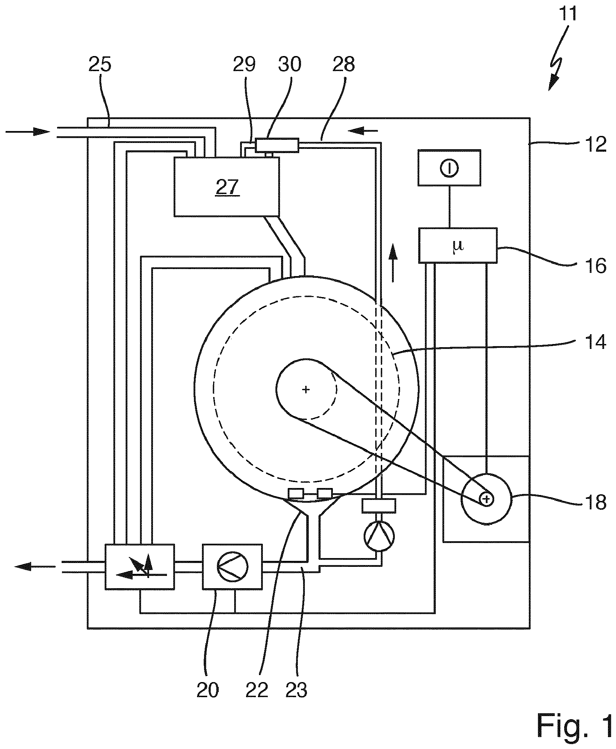

In der Fig. 1 ist eine Waschmaschine 11 dargestellt mit einem Gehäuse 12, in dem eine übliche Trommel 14 samt Antrieb 18 angeordnet ist. Die Waschmaschine 11 weist eine Steuerung 16 auf. Diese ist unter anderem mit einer Pumpe 20 verbunden, die mittels einer Pumpenzuleitung 23 an einen Sumpf 22 unterhalb der Trommel 14 verbunden ist. Die Pumpe 20 dient dazu, Wasser in der Waschmaschine 11 zu pumpen bzw. zu zirkulieren. Durch eine nicht dargestellte eingebaute Heizeinrichtung, wie sie beispielsweise aus der EP 3008346 A1 bekannt ist, kann Wasser unterschiedlich innerhalb der Waschmaschine 11 gepumpt werden. Des Weiteren kann es dabei erwärmt werden, so dass mittels der Pumpe 20 warmes oder sogar heißes Wasser beliebig zur Verfügung gestellt werden kann.

Links oben reicht eine Frischwasserleitung 25 in die Waschmaschine 11 und geht zu einer an sich üblichen Schublade 27. Hier kann auf bekannte Art und Weise Waschmittel odgl. eingefüllt und einem in der Waschmaschine 11 stattfindenden Waschvorgang zugeführt werden.

Von dem Sumpf 22 geht nach rechts und nach oben eine über eine Pumpe versorgte Zuleitung 28 zu einer erfindungsgemäßen Sensorvorrichtung 30. Von der Sensorvorrichtung 30 führt eine Ableitung 29 in die Schublade 27 und so über eine weitere Leitung unten an der Schublade 27 zur Trommel 14. Die Sensorvorrichtung 30 ist auf nicht dargestellte Art und Weise mit der Steuerung 16 verbunden, vorteilhaft mittels Kabel.

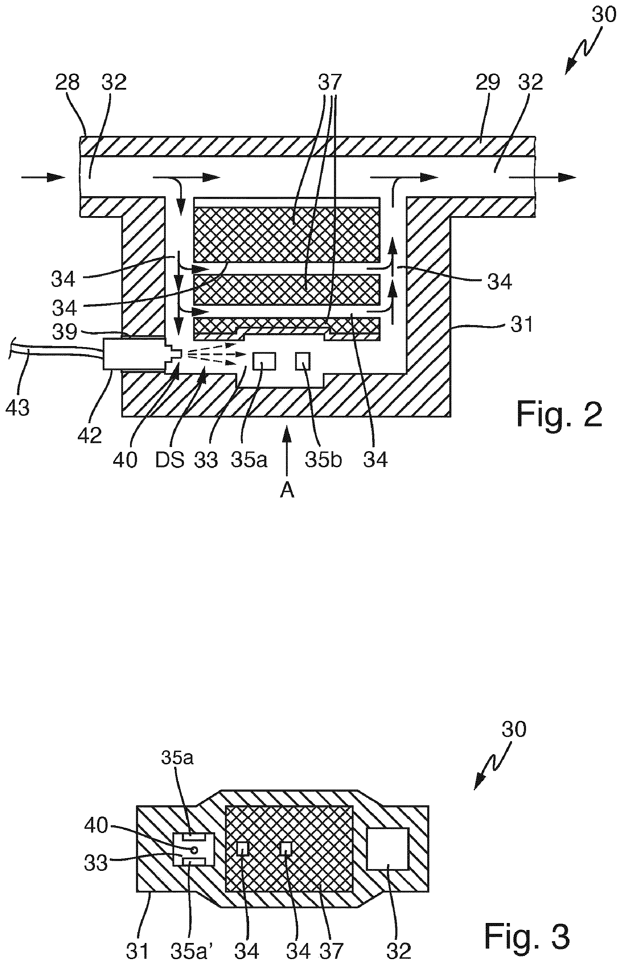

In der Fig. 2 ist die erfindungsgemäße Sensorvorrichtung 30 im Detail dargestellt. Die Sensorvorrichtung 30 weist ein Gehäuse 31 auf, in welches von links eine Zuleitung 28 mit einer weiteren Pumpe 21 hineinführt. Rechts führt die Ableitung 29 heraus. Dazwischen ist eine Fluidführung vorgesehen, die neben einer Hauptdurchleitung 32 in gerader Erstreckung von Zuleitung 28 und Ableitung 29 Nebenleitungen 34 aufweist, die durch Abtrennungen 37 gebildet sind. Des Weiteren ist eine erweiterte Sensorkammer 33 vorgesehen, in der zwei Sensoren 35a und 35b vorgesehen sind. Mit den Sensoren 35a und 35b kann gleichzeitig oder nacheinander gemessen werden, insbesondere können Verunreinigungen in dem Wasser erfasst werden, welches in der Waschmaschine 11 verwendet wird und welches am Sumpf 22 aus der Trommel 14 entnommen wird. Neben Verunreinigungen können dabei beispielsweise auch bestimmte Faserarten, insbesondere Mikrofasern aus Kunststoff, in dem Wasser bzw. Fluid erfasst werden. Dann kann beispielsweise eine andere Wasserführung, insbesondere auch eine verbesserte Filterung, vorgenommen werden, damit möglichst wenige Mikrofasern mit Abwasser aus der Waschmaschine 11 heraus gelangen können.

Links in der Sensorkammer 33 bzw. dort, wo die linke Nebenleitung 34 in die Sensorkammer 33 hineinläuft, ist eine Bohrung 39 im Gehäuse 31 vorgesehen. In diese Bohrung 39 ist eine Düse 40 mit ihrem Düsengehäuse 42 eingesteckt oder eingeschraubt, vorteilhaft abgedichtet und für Reparaturzwecke entfernbar. Die Düse 40 wird von hinten mit einer Düsenzuleitung 43 versorgt. Auch die Düsenzuleitung 43 kann entsprechend Fig. 1 mit einer speziellen Leitung verbunden sein, die von der Pumpe 20 oder der Pumpe 21 mit Fluid bzw. Wasser beschickt wird, wozu die spezielle Leitung noch mit Ventilen mit einer der Pumpen 20 oder 21 verbunden werden kann. Alternativ kann eine nochmals weitere Pumpe vorgesehen sein. Möglicherweise kann auch aus einem Reinigungslösungsbehälter 24 mittels der Pumpe 21 spezielle Reinigungslösung mittels der Düse 40 in die Sensorkammer 33 eingebracht werden zu deren verbesserten Reinigung.

Dieses Wasser tritt dann an der Düsenöffnung als gestrichelt dargestellte Düsenstrahlen DS aus. Die Düsenstrahlen DS sind auf die Bereiche gerichtet, in denen die Sensoren 35a und 35b messen, also auf deren Messstellen. Hieraus ist leicht ersichtlich, dass Verunreinigungen, die sich an den Sensoren 35a und 35b gesammelt oder möglicherweise abgesetzt haben, durch einen Wasserstrahl entfernt werden können. Selbst wenn dabei die Sensorkammer 33 mit Wasser gefüllt sein sollte, können die Düsenstrahlen DS eine gute Reinigungswirkung erzielen.

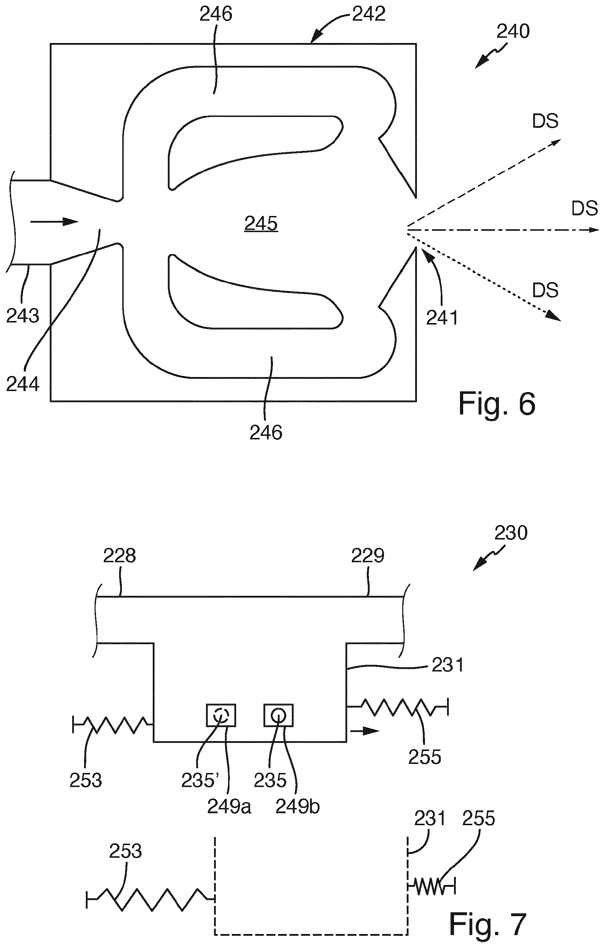

Wie eingangs erläutert worden ist, können die Düsenstrahlen DS eine fixe Richtung aufweisen und als dünner Strahl, als Fächer, als aufgeweiteter Strahl oder als Kegelstrahl, austreten. Es kann auch ein oszillierender Düsenstrahl vorgesehen sein, dies wird nachfolgend anhand der Fig. 6 noch im Detail erläutert.

In der anderen Schnittdarstellung der Fig. 3 durch die Sensorvorrichtung 30 ist zu ersehen, wie die Düse 40 in die Sensorkammer 33 hineinreicht, und zwar im Wesentlichen mit einer Mittellängsrichtung, die einer Mittellängsrichtung der Sensorkammer 33 entspricht oder zumindest parallel zu dieser verläuft. So kann eine möglichst starke Durchströmung durch die Sensorkammer 33 erzeugt werden. Weggespülte Verunreinigungen oder Fasern werden gemäß Fig. 2 durch die rechte Nebenleitung 34 hin zur Ableitung 29 gespült und dann aus der Sensorvorrichtung 30 entfernt.

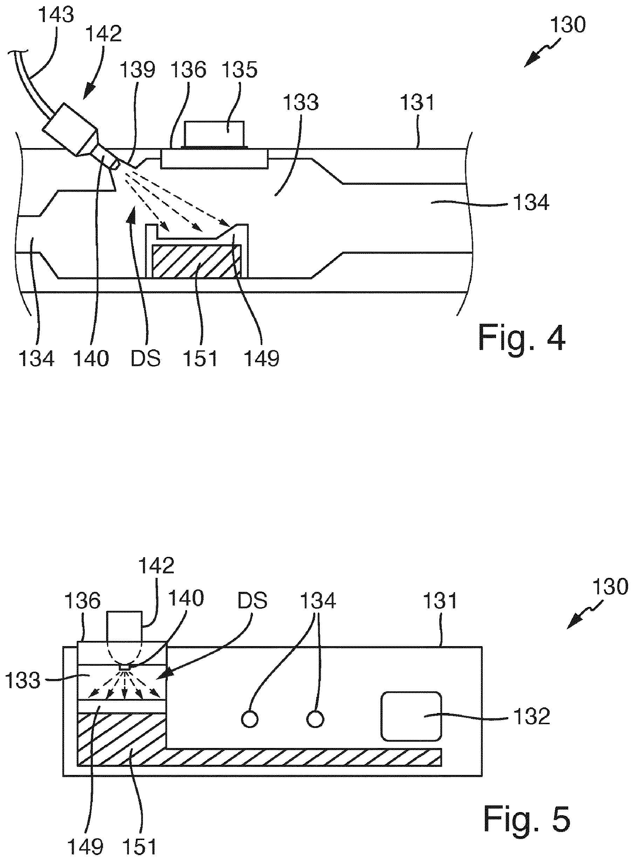

In der Fig. 4 ist eine etwas anders ausgestaltete Sensorvorrichtung 130 dargestellt mit einem Gehäuse 131. In diesem ist ebenfalls eine Sensorkammer 133 ausgebildet, welche mit Nebenleitungen 134 an eine Fluidführung ähnlich der Fig. 2 angeschlossen sein kann. Alternativ können in der Sensorvorrichtung 130 keine Nebenleitungen vorgesehen sein, sondern eine möglichst einfach ausgebildete Sensorvorrichtung ist dann links an eine Zuleitung ähnlich der Zuleitung 28 und rechts an eine Ableitung ähnlich der Ableitung 29 der Fig. 2 angeschlossen.

In der Sensorkammer 133 ist eine vorgenannte Messstelle 149 vorgesehen. Unterhalb dieser Messstelle 149 befindet sich ein Wärmeleitkörper 151, der gemäß der anderen Schnittdarstellung der Fig. 5 bis zu einer Hauptdurchleitung 132 führt. Von dort kann der Wärmeleitkörper 151 erwärmt werden, wenn die Hauptdurchleitung 132 mit warmem bzw. heißem Wasser durchströmt wird. Dadurch ist es möglich, wenn die Fluidführung der Sensorvorrichtung 130 so gestaltet ist, dass mittels der Nebenleitungen 134, auch gerade entsprechend Fig. 5, kein Durchfluss durch die Sensorkammer 133 erfolgt, dass auf der Messstelle 149 befindliches Wasser zumindest teilweise verdampft und dann die Inhaltsstoffe, insbesondere Mikrofasern, auf der Messstelle 149 liegen bleiben. Oberhalb der Messstelle 149 ist ein Sensorfenster 136 angeordnet, welches lichtdurchlässig ist. Oben auf dem Sensorfenster 136 bzw. oberhalb davon ist ein Sensor 135 vorgesehen, beispielsweise als IR-Spektrometer.

Links neben dem Sensorfenster 136 ist eine Bohrung 139 in das Gehäuse 131 vorgesehen. In diese Bohrung 139 ist eine Düse 140 eingesteckt. Sie weist ein Düsengehäuse 142 und eine Düsenzuleitung 143 auf. Vorne an einer Düsenöffnung 141 erzeugt die Düse 140 gestrichelt dargestellte Düsenstrahlen DS, die etwas aufgefächert sind nach Art eines aufgeweiteten Strahls. Die Düse 140 ist genau auf die Messstelle 149 bzw. deren Mittelbereich gerichtet, um nach erfolgter Messung mittels des Sensors 135, der vorteilhaft mit der Steuerung der Waschmaschine entsprechend Fig. 1 verbunden ist, die Messstelle 149 wieder zu säubern bzw. zu reinigen. Ein solcher Vorgang kann wenige Sekunden dauern, beispielsweise maximal 5 Sekunden oder auch nur 2 Sekunden. Er wird von der Steuerung veranlasst, die auch mit einer Fluidversorgung für die Düse 140 verbunden ist, beispielsweise in Form der Pumpe 20 der Fig. 1 mit einer separaten Leitung als Düsenzuleitung 143.

Aus den Fig. 4 und 5 ist zu erkennen, dass die Düse 140 schräg in die Sensorkammer 133 hinein gerichtet ist, hier leicht schräg von oben. Diese Ausrichtung soll das Reinigen erleichtern bzw. das Ergebnis verbessern.

In der Fig. 6 ist beispielhaft eine Düse 240 dargestellt.

Die Düse 240 weist ein Düsengehäuse 242 auf. Soll die Düse 240 möglichst klein ausgebildet sein, so kann das Düsengehäuse 242 aus Glas bestehen und seine Struktur herausgeätzt werden. So kann ein Düsengehäuse 242 geschaffen werden, dessen Abmessungen jeweils unterhalb von 4 mm oder sogar unterhalb von 3 mm bleiben. Eine solch kleine Düse kann sehr gut in eine erfindungsgemäße Sensorvorrichtung integriert werden, die ebenfalls sehr klein ist, beispielsweise eine Länge von 3 cm bis 10 cm aufweist.

Im Düsengehäuse 242 ist von links eine Düsenleitung 243 herangeführt. Sie ist mit einem Einlass 244 in das Düsengehäuse 242 verbunden. Von dem Einlass 244 geht nach links und nach rechts jeweils eine Rückkopplungsleitung 246 ab. Die beiden Rückkopplungsleitungen 246 sind symmetrisch zueinander ausgebildet. Mittig geht der Einlass 244 in eine Strömungskammer 245 über. Rechts bzw. zu einer Düsenöffnung 241 hin treffen sich die drei Bereiche wieder. Aufgrund der Verbindung der Rückkopplungsleitungen 246 mit dem Hauptflüssigkeitsstrom durch die Strömungskammer 245 wird ein jeweils erzeugter Düsenstrahl DS leicht abgelenkt bzw. bewegt sich, oszilliert also, da diese Bewegung wiederholt erfolgen kann, insbesondere regelmäßig erfolgen kann. Durch die Rückkopplungsleitungen 246 kann vor allem auch ein mit Luft vermischtes Wassergemisch vorne wieder zu der Strömungskammer 245 vor der Düsenöffnung 241 zugeführt werden. Diese Zuführung ändert sich zeitlich, wodurch eben der erzeugte und ausgestrahlte Düsenstrahl DS oszilliert. Dies ist zu erkennen durch die unterschiedliche Darstellung der drei Düsenstrahlen DS zwischen gestrichelt, strichpunktiert und punktiert. Der Düsenstrahl DS kann jeweils nacheinander diese verschiedenen Richtungen einnehmen.

In der Fig. 7 ist für eine weitere Sensorvorrichtung 230 auf stark vereinfachte Art und Weise dargestellt, wie diese bewegbar ausgebildet sein kann, um mit einem Sensor an zwei unterschiedlichen Messstellen messen zu können. Ein Gehäuse 231 der Sensorvorrichtung 230 ist ähnlich der Fig. 2 ausgebildet, links sind eine Zuleitung 228 und rechts eine Ableitung 229 vorgesehen, die flexibel sein können oder gelenkige Anschlüsse aufweisen können, welche hier nicht gezeigt sind. Für eine nicht dargestellte Sensorkammer sind hier stellvertretend eine Messstelle 249a und eine rechte Messstelle 249b dargestellt. Die Messstellen 249 sind natürlich in einer solchen Sensorkammer angeordnet. Über der rechten Messstelle 249b ist ein Sensor 235 angeordnet. Er kann durch ein entsprechendes vorbeschriebenes Sensorfenster auf die entsprechende Messstelle 249b schauen bzw. dort messen.

Links greift an dem Gehäuse 231 mindestens eine Thermofeder 253 an. Diese besteht aus einem Material, welches sich bei Erwärmung stark ausdehnt, hier dann eben mit der Federkraft. Alternativ könnte es auch eine Formgedächtnislegierung sein. Der Thermofeder 253 gegenüberliegend ist auf der rechten Seite des Gehäuses 231 mindestens eine Gegenfeder 255 angeordnet. Sie ist vorteilhaft eine übliche Feder aus Metall mit normaler Federkonstante. Hier kann auch jeweils eine Doppelfederanordnung verwendet werden,

Eine Wasserleitung, durch welche mittels der Pumpe 20 auch heißes Wasser gepumpt werden kann, ist nahe an der Thermofeder 253 vorbeigeführt. Dadurch erwärmt sich diese und aufgrund ihrer Ausbildung dehnt sie sich bei Erwärmung eben aus. Dies ist in Fig. 7 unten dargestellt mit ausgedehnter Thermofeder 253. Sie hat das Gehäuse 231 nach rechts gegen die Kraft der Gegenfeder 255 gedrückt, die dabei entsprechend zusammengestaucht wird. In dieser nach rechts verschobenen Position des Gehäuses 231 bzw. der gesamten Sensorvorrichtung 230 ist der stationär angeordnete und befestigte Sensor 235 in die links mit 235' bezeichnete und gepunktet dargestellte Position relativ zu dem Gehäuse 231 gebracht. Nun kann der Sensor 235 an der linken Messstelle 249a messen. Hierzu wird auf die eingangs gemachten Erläuterungen verwiesen, an der rechten Messstelle 249b kann womöglich eine längere Trocknung stattfinden oder aber bereits eine Reinigung der Messstelle mittels einer erfindungsgemäßen Düsenvorrichtung. Alternative Aktoren könnten auch Elektromagnete oder Elektromotoren anstatt Thermoaktoren bzw. thermischen Aktoren sein.

## Patentansprüche

1. Sensorvorrichtung (30, 130, 230) für ein wasserführendes Haushaltsgerät (11) zur Untersuchung eines Fluids, mit:
- einem Sensorkammergehäuse, das eine Sensorkammer (33, 133) und eine Fluidführung (28, 29, 228, 229) für das zu untersuchende Fluid aufweist, wobei die Fluidführung (28, 29, 228, 229) dazu ausgebildet ist, das zu untersuchende Fluid innerhalb des Sensorkammergehäuses zur Sensorkammer (33, 133) hin und von der Sensorkammer (33, 133) weg zu führen, wobei die Sensorkammer (33, 133) einen Sensorkammer-Einlass und einen Sensorkammer-Auslass aufweist,
- mindestens einem Sensor (35, 135, 235) in oder an der Sensorkammer (33, 133) zur Untersuchung des in der Sensorkammer (33, 133) befindlichen Fluids oder darin befindlicher Stoffe,
wobei die Sensorvorrichtung (30, 130, 230) aufweist:
- eine Düsenvorrichtung, die in die Sensorkammer (33, 133) und/oder in die Fluidführung reicht zum Einstrahlen eines Fluids,
- eine Fluidversorgung (43, 143, 243) für die Düse (40, 140, 240),
- eine Steuerung (16), die mit der Fluidversorgung (43, 143, 243) für die Düsenvorrichtung verbunden ist zur Ansteuerung der Fluidversorgung (43, 143, 243),
**dadurch gekennzeichnet, dass**
- die Düse (40, 140, 240) am Eintritt eines Teils der Fluidführung (28, 29, 228, 229) zu der Sensorkammer (33, 133) in die Sensorkammer (33, 133) angeordnet ist,
- die Düsenvorrichtung derart ausgerichtet ist, dass ihre Strahlrichtung zumindest teilweise eine Richtungskomponente entlang der Fluidströmung durch die Sensorkammer (33, 133) aufweist.

2. Sensorvorrichtung nach Anspruch 1, **dadurch gekennzeichnet, dass** die Düsenvorrichtung in der Sensorkammer (33, 133) auf eine Stelle gerichtet ist, die bei durchströmendem Fluid vor derjenigen Stelle liegt, an der der Sensor (35, 135, 235) misst.

3. Sensorvorrichtung nach Anspruch 1, **dadurch gekennzeichnet, dass** die Düse (40, 140, 240) direkt auf diejenige Stelle in der Sensorkammer (33, 133) gerichtet ist, an der der Sensor (35, 135, 235) misst.

4. Sensorvorrichtung nach einem der vorhergehenden Ansprüche, **dadurch gekennzeichnet, dass** die Düse (40, 140, 240) in einem Bereich angeordnet ist, in dem sich die Fluidführung (28, 228) zu der Sensorkammer (33, 133) im Durchflussquerschnitt um mehr als 50% vergrößert.

5. Sensorvorrichtung nach einem der vorhergehenden Ansprüche, **dadurch gekennzeichnet, dass** die Düsenvorrichtung ausgerichtet ist mit einem Winkel von maximal 45° zu der Fluidströmung an derjenigen Stelle, an der der Sensor (35, 135, 235) misst.

6. Sensorvorrichtung nach einem der vorhergehenden Ansprüche, **dadurch gekennzeichnet, dass** die Düsenvorrichtung fest an der Sensorvorrichtung (30, 130, 230) befestigt ist, insbesondere mit unverstellbarer Strahlrichtung.

7. Sensorvorrichtung nach einem der Ansprüche 1 bis 5, **dadurch gekennzeichnet, dass** die Düse (240) derart ausgebildet ist, dass sie einen oszillierenden Düsenstrahl (DS) erzeugt, der vorzugsweise in einer Ebene oder innerhalb oder entlang eines Kegels oszilliert oder variiert, wobei insbesondere entweder die oszillierend ausgebildete Düse (240) in einem Düsenkammerraum bewegbare Teile aufweist zur Erzeugung des oszillierenden Düsenstrahls (DS) oder die oszillierend ausgebildete Düse (240) ohne bewegbare Teile im Inneren ausgebildet ist.

8. Sensorvorrichtung nach Anspruch 7, **dadurch gekennzeichnet, dass** bei einer Düse (240) mit einem oszillierenden Düsenstrahl (DS) die Düsenrichtung definiert wird durch eine Mittelrichtung oder Symmetrieachse desjenigen Bereichs, innerhalb dessen der Düsenstrahl (DS) oszilliert.

9. Sensorvorrichtung nach einem der vorhergehenden Ansprüche, **dadurch gekennzeichnet, dass** eine Düsenzuleitung (43, 143, 243) für das Fluid zu der Düse (40, 140, 240) als Schlauchleitung flexibel ausgebildet ist.

10. Sensorvorrichtung nach einem der vorhergehenden Ansprüche, **dadurch gekennzeichnet, dass** der Sensor (235) nicht fest und an einer einzigen Stelle am Sensorkammergehäuse befestigt ist sondern relativ beweglich dazu, wobei die Sensorkammer zwei Messstellen für den Sensor (235) aufweist und die Sensorkammer relativ zu dem Sensor (235) bewegbar ist zwischen zwei Relativ-Messpositionen, wobei in jeder Relativ-Messposition der Sensor (235) auf eine der Messstellen gerichtet ist.

11. Sensorvorrichtung nach Anspruch 10, **dadurch gekennzeichnet, dass** eine Aktorvorrichtung (253, 255) vorgesehen ist zur Durchführung der Relativbewegung zwischen Sensor (235) und Sensorkammergehäuse, wobei vorzugsweise die Aktorvorrichtung thermisch beeinflussbar ist durch einen thermischen Aktor (253, 255) ausgebildet als Thermobimetall, Gedächtnislegierung, wobei vorzugsweise eine Fluidleitung (228) zu der Sensorvorrichtung (230) oder eine Fluidleitung (229) von der Sensorvorrichtung (230) an dem thermischen Aktor (253, 255) vorbeigeführt ist zur thermischen Beeinflussung des Aktors (253, 255) durch die Temperatur des Fluids in der Fluidleitung (228, 229).

12. Wasserführendes Haushaltsgerät (11) mit einer Sensorvorrichtung (30, 130, 230) nach einem der vorhergehenden Ansprüche zur Untersuchung eines Fluids in dem Haushaltsgerät (11).

13. Verfahren zum Betrieb einer Sensorvorrichtung (30, 130, 230) nach einem der Ansprüche 1 bis 11, **dadurch gekennzeichnet, dass** nach Durchführen einer Messung mit dem Sensor (35, 135, 235), insbesondere direkt danach, und/oder vor Durchführen einer Messung mit dem Sensor (35, 135, 235), insbesondere direkt davor, die Sensorkammer (33, 133) gereinigt wird mittels der Düse (40, 140, 240) durch Einstrahlen eines Düsenstrahls (DS) bestehend aus Fluid in die Sensorkammer (33, 133).

14. Verfahren nach Anspruch 13, **dadurch gekennzeichnet, dass** "direkt danach" oder "direkt davor" als Dauer von maximal 5 Sekunden bestimmt ist, vorzugsweise maximal 2 Sekunden oder 1 Sekunde.

## Claims

1. Sensor device (30, 130, 230) for a water-conducting domestic appliance (11) for examining a fluid, with:
- a sensor chamber housing having a sensor chamber (33, 133) and a fluid guide (28, 29, 228, 229) for the fluid to be tested, the fluid guide (28, 29, 228, 229) being adapted to to guide the fluid to be examined inside the sensor chamber housing towards the sensor chamber (33, 133) and away from the sensor chamber (33, 133), the sensor chamber (33, 133) having a sensor chamber inlet and a sensor chamber outlet,
- at least one sensor (35, 135, 235) in or on the sensor chamber (33, 133) for examining the fluid or substances in the sensor chamber (33, 133),
the sensor device (30, 130, 230) comprising
- a nozzle device extending into the sensor chamber (33, 133) and/or into the fluid supply for jetting a fluid,
- a fluid supply (43, 143, 243) for the nozzle (40, 140, 240),
- a controller (16) connected to the fluid supply (43, 143, 243) for the nozzle for controlling the fluid supply (43, 143, 243),
**characterised in that**
- the nozzle (40, 140, 240) is arranged at the inlet of a part of the fluid supply (28, 29, 228, 229) to the sensor chamber (33, 133) into the sensor chamber (33, 133),
- the nozzle device is oriented such that its jet direction at least partially has a directional component along the fluid flow through the sensor chamber (33, 133).

2. Sensor device according to claim 1, **characterised in that** the nozzle device in the sensor chamber (33, 133) is directed towards a point which, when the fluid is flowing through it, lies in front of the point at which the sensor (35, 135, 235) measures.

3. Sensor device according to claim 1, **characterised in that** the nozzle (40, 140, 240) is directed directly at the point in the sensor chamber (33, 133) at which the sensor (35, 135, 235) measures.

4. Sensor device according to one of the preceding claims, **characterised in that** the nozzle (40, 140, 240) is arranged in a region in which the fluid guide (28, 228) to the sensor chamber (33, 133) increases in flow cross-section by more than 50%.

5. Sensor device according to one of the preceding claims, **characterised in that** the nozzle device is aligned with an angle of at most 45° to the fluid flow at the point where the sensor (35, 135, 235) measures.

6. Sensor device according to one of the preceding claims, **characterised in that** the nozzle device is fixedly attached to the sensor device (30, 130, 230), in particular with a non-adjustable jet direction.

7. Sensor device according to any one of claims 1 to 5, **characterized in that** the nozzle (240) is designed to generate an oscillating nozzle jet (DS), preferably oscillating or varying in a plane or within or along a cone, wherein in particular either the oscillating nozzle (240) has movable parts in a nozzle chamber space for generating the oscillating nozzle jet (DS) or the oscillating nozzle (240) is formed without movable parts in the interior.

8. Sensor device according to claim 7, **characterised in that**, in the case of a nozzle (240) with an oscillating nozzle jet (DS), the nozzle direction is defined by a central direction or axis of symmetry of that region within which the nozzle jet (DS) oscillates.

9. Sensor device according to one of the preceding claims, **characterized in that** a nozzle supply line (43, 143, 243) for the fluid to the nozzle (40, 140, 240) is flexibly designed as a hose line.

10. Sensor device according to one of the preceding claims, **characterized in that** the sensor (235) is not fixedly attached to the sensor chamber housing at a single location but is movable relative thereto, the sensor chamber having two measuring locations for the sensor (235) and the sensor chamber being movable relative to the sensor (235) between two relative measuring positions, wherein in each relative measuring position the sensor (235) is directed to one of the measuring locations.

11. Sensor device according to claim 10, **characterised in that** an actuator device (253, 255) is provided for carrying out the relative movement between sensor (235) and sensor chamber housing, wherein preferably the actuator device can be thermally influenced by a thermal actuator (253, 255) constructed as a thermobiometal, A thermal actuator (253, 255) in the form of a thermal sensor (230) and a thermal memory device, wherein preferably a fluid line (228) to the sensor device (230) or a fluid line (229) from the sensor device (230) is routed past the thermal actuator (253, 255) for thermally influencing the actuator (253, 255) by the temperature of the fluid in the fluid line (228, 229).

12. Water-conducting domestic appliance (11) with a sensor device (30, 130, 230) according to one of the preceding claims for examining a fluid in the domestic appliance (11).

13. Method for operating a sensor device (30, 130, 230) according to one of the claims 1 to 11, **characterized in that** after carrying out a measurement with the sensor (35, 135, 235), in particular directly afterwards, and/or before carrying out a measurement with the sensor (35, 135, 235), in particular directly before, the sensor chamber (33, 133) is cleaned by means of the nozzle (40, 140, 240) by jetting a nozzle jet (DS) consisting of fluid into the sensor chamber (33, 133).

14. A method according to claim 13, **characterized in that** "directly after" or "directly before" is determined as a duration of maximum 5 seconds, preferably maximum 2 seconds or 1 second.

## Revendications

1. Dispositif de détection (30, 130, 230) pour un appareil ménager à eau (11) pour l'examen d'un fluide, comprenant :
- un boîtier de chambre de capteur, qui présente une chambre de capteur (33, 133) et un guidage de fluide (28, 29, 228, 229) pour le fluide à examiner, le guidage de fluide (28, 29, 228, 229) étant conçu pour, de guider le fluide à examiner à l'intérieur du boîtier de la chambre de capteur vers la chambre de capteur (33, 133) et à l'écart de la chambre de capteur (33, 133), la chambre de capteur (33, 133) comprenant une entrée de chambre de capteur et une sortie de chambre de capteur,
- au moins un capteur (35, 135, 235) dans ou sur la chambre de capteur (33, 133) pour examiner le fluide dans la chambre de capteur (33, 133) ou les substances qui s'y trouvent,
le dispositif de détection (30, 130, 230) comprenant :
- un dispositif de buse qui s'étend dans la chambre de capteur (33, 133) et/ou dans l'alimentation en fluide pour projeter un fluide,
- une alimentation en fluide (43, 143, 243) pour la buse (40, 140, 240),
- une commande (16) qui est reliée à l'alimentation en fluide (43, 143, 243) pour le dispositif de buse afin de commander l'alimentation en fluide (43, 143, 243),
**caractérisé en ce que**
- la buse (40, 140, 240) est disposée à l'entrée d'une partie du guide de fluide (28, 29, 228, 229) vers la chambre de capteur (33, 133) dans la chambre de capteur (33, 133),
- le dispositif de buse est orienté de telle sorte que sa direction de jet présente au moins partiellement une composante directionnelle le long de l'écoulement de fluide à travers la chambre de capteur (33, 133).

2. Dispositif de détection selon la revendication 1, **caractérisé en ce que** le dispositif de buse dans la chambre de détection (33, 133) est dirigé vers un endroit qui, lorsque le fluide s'écoule à travers lui, se trouve en amont de l'endroit où le capteur (35, 135, 235) effectue la mesure.

3. Dispositif de détection selon la revendication 1, **caractérisé en ce que** la buse (40, 140, 240) est dirigée directement vers l'endroit de la chambre de détection (33, 133) où le capteur (35, 135, 235) effectue la mesure.

4. Dispositif de détection selon l'une des revendications précédentes, **caractérisé en ce que** la buse (40, 140, 240) est disposée dans une zone dans laquelle la section d'écoulement du conduit de fluide (28, 228) vers la chambre de détection (33, 133) augmente de plus de 50%.

5. Dispositif de détection selon l'une des revendications précédentes, **caractérisé en ce que** le dispositif de buse est orienté avec un angle de 45° maximum par rapport au flux de fluide à l'endroit où le capteur (35, 135, 235) effectue la mesure.

6. Dispositif de détection selon l'une des revendications précédentes, **caractérisé en ce que** le dispositif de buses est fixé au dispositif de détection (30, 130, 230), notamment avec une direction de jet non réglable.

7. Dispositif de détection selon l'une des revendications 1 à 5, **caractérisé en ce que** la buse (240) est configurée pour générer un jet oscillant (DS) qui oscille ou varie de préférence dans un plan ou à l'intérieur ou le long d'un cône, en particulier, soit la buse (240) de conception oscillante présente des parties mobiles dans un espace de chambre de buse pour générer le jet de buse (DS) oscillant, soit la buse (240) de conception oscillante est formée sans parties mobiles à l'intérieur.

8. Dispositif de détection selon la revendication 7, **caractérisé en ce que**, dans le cas d'une buse (240) avec un jet de buse oscillant (DS), la direction de la buse est définie par une direction centrale ou un axe de symétrie de la zone à l'intérieur de laquelle le jet de buse (DS) oscille.

9. Dispositif de détection selon l'une des revendications précédentes, **caractérisé en ce qu'**une conduite d'alimentation de buse (43, 143, 243) pour le fluide vers la buse (40, 140, 240) est conçue comme une conduite flexible.

10. Dispositif de détection selon l'une des revendications précédentes, **caractérisé en ce que** le capteur (235) n'est pas fixé de manière fixe et à un seul endroit sur le boîtier de la chambre de détection, mais est mobile par rapport à celui-ci, la chambre de détection présentant deux points de mesure pour le capteur (235) et la chambre de détection étant mobile par rapport au capteur (235) entre deux positions de mesure relatives, le capteur (235) étant orienté vers l'un des points de mesure dans chaque position de mesure relative.

11. Dispositif de détection selon la revendication 10, **caractérisé en ce qu'**un dispositif d'actionnement (253, 255) est prévu pour effectuer le mouvement relatif entre le capteur (235) et le boîtier de la chambre de détection, le dispositif d'actionnement pouvant de préférence être influencé thermiquement par un actionneur thermique (253, 255) conçu comme un thermo-bi-métal, une conduite de fluide (228) vers le dispositif de détection (230) ou une conduite de fluide (229) depuis le dispositif de détection (230) étant de préférence guidée au-delà de l'actionneur thermique (253, 255) pour influencer thermiquement l'actionneur (253, 255) par la température du fluide dans la conduite de fluide (228, 229).

12. Appareil ménager à eau (11) comprenant un dispositif de détection (30, 130, 230) selon l'une des revendications précédentes pour analyser un fluide dans l'appareil ménager à eau (11).

13. Procédé de mise en oeuvre d'un dispositif de détection (30, 130, 230) selon l'une des revendications 1 à 11, **caractérisé en ce qu'**après avoir effectué une mesure avec le capteur (35, 135, 235), notamment juste après, et/ou avant d'effectuer une mesure avec le capteur (35, 135, 235), notamment juste avant, la chambre de détection (33, 133) est nettoyée au moyen de la buse (40, 140, 240) en projetant un jet de buse (DS) constitué de fluide dans la chambre de détection (33, 133).

14. Procédé selon la revendication 13, **caractérisé en ce que** "juste après" ou "juste avant" est déterminé comme une durée de 5 secondes maximum, de préférence de 2 secondes ou 1 seconde maximum.
